# EUROPÄISCHE PATENTSCHRIFT

(11) **EP 1 001 138 B1**
(45) Veröffentlichungstag und Bekanntmachung des Hinweises auf die Patenterteilung: **11.06.2003**
(21) Anmeldenummer: 98811123.3
(22) Anmeldetag: 10.11.1998
(51) Int. Cl.: F01D 11/08, F16J 15/447

(54) **Spitzendichtung für Turbinenlaufschaufeln**
Turbine blade tip sealing
Dispositif d'étanchéité pour les extrémités des aubes de turbine

(43) Veröffentlichungstag der Anmeldung: 17.05.2000
(73) Patentinhaber: ALSTOM (Switzerland) Ltd, 5401 Baden (CH)
(72) Erfinder: Kreitmeier, Franz, 5400 Baden (CH)

(56) Entgegenhaltungen:
- US-A- 3 680 977
- US-A- 4 565 492
- PATENT ABSTRACTS OF JAPAN vol. 008, no. 096 (M-294), 4. Mai 1984 & JP 59 012102 A (TOKYO SHIBAURA DENKI KK), 21. Januar 1984

## Beschreibung

### Technisches Gebiet

Die Erfindung betrifft eine Labyrinthdichtung zwischen den Laufschaufeln und dem Gehäuse einer axial durchströmten Turbomaschine, bei der die Laufschaufeln mit Deckbändern und das Turbinengehäuse mit Dichtstreifen versehen sind. Die Erfindung betrifft insbesondere die Abdeckung der Kavität, die am Ausgang der Labyrinthdichtung vom Deckband einer Laufschaufel und dem Turbinengehäuse gebildet wird, und die Verbesserung der Strömungsverhältnisse am Strömungsaustritt von jener Laufschaufel.

### Stand der Technik

Labyrinthdichtungen mittels Dichtstreifen und Deckbändem sind allgemein bekannt. Sie dienen der Reduzierung des Spaltverlusts durch Verminderung des Spaltmassenstroms zwischen dem Laufschaufelende und dem konisch ausgebildeten Turbinengehäuse. Hierfür wird die Dichtwirkung erhöht, beispielsweise durch eine Labyrinthdichtung bestehend aus mehreren Dichtstreifen und einer stufenweisen Ausbildung der Deckbänder, wie es in der Schweizerischen Patentschrift CH 589 787 beschrieben ist.
Die genannten Labyrinthdichtungen dienen nicht nur der Verringerung des Spaltverlusts, sondern auch der Verringerung des Randverlusts, auch Sekundärströmung genannt, die mit dem Spaltmassenstrom einhergeht. Die Spalt- sowie Randverluste werden zum Beispiel durch eine in der DE 35 23 469 beschriebene Dichtungslösung reduziert, bei der die Deckplatten mit einem Spaltgitter versehen sind, das die Spaltströmung in eine Richtung umlenkt, welche eine verbesserte Rückführung in die Hauptströmung ermöglicht und so Randverluste reduzieren soll.

Der Verschmälerung des Spaltes sind jedoch konstruktive und betriebliche Grenzen gesetzt. Damit die stationären und rotierenden Turbinenteile ohne Anstreifen aneinander vorbeigleiten, muss sich zwischen ihnen ein Spalt befinden, der so bemessen ist, dass den unterschiedlichen thermischen Dehnungen der Turbinenteile während des Normalbetriebs sowie während des An- und Abfahrens der Turbine genug Spiel gewährt ist.
Bekannte Turbinen weisen einerseits zwischen den stehenden und beweglichen Teilen einen Abstand auf, der diesen thermischen Dehnungen das nötige Spiel erlaubt. Um das Risiko von Schäden durch Anschlagen der Turbinenteile weiter zu vermindern, weisen sie anderseits einen zusätzlichen Sicherheitsabstand auf. Die Differenz zwischen der Ausdehnung des Rotors und der des Gehäuses hängt von der Temperatur und dem Druck des Dampfes sowie auch von der Grösse der Turbine ab. Deshalb sind die erwähnten Spaltabstände bei Turbinen höherer Leistung sowie Niederdruckturbinen mit grossem Konuswinkel besonders gross.

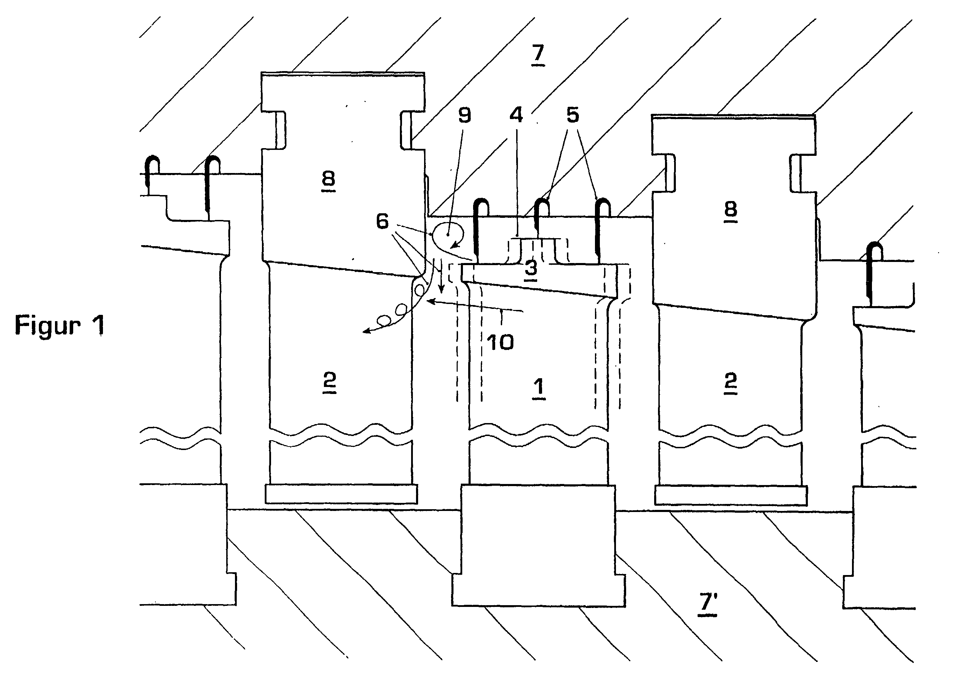

In einer bekannten Labyrinthdichtung der Anmelderin, wie sie nachfolgend in Figur 1 gezeigt ist, befindet sich austrittsseitig der Laufschaufel eine Kavität, welche durch das Deckband, den Leitschaufelfuss und durch die Eindrehung im Turbinengehäuse, in welche das Deckband der Laufschaufel eingreift, gebildet wird. In dieser Kavität wird der vom letzten Dichtstreifen austretende Spaltstrom durch Verwirbelung dissipiert. Die Dissipation des Spaltstroms in der Kavität erbringt jedoch keine Reduzierung des Spaltmassenstroms, da der Druck in der Kavität durch die Hauptströmung aufgeprägt wird. Ferner ergibt sich ein durch das Druckfeld im Schaufelkanal getriebener Queraustausch zwischen der Spaltströmung aus der Kavität und der Hauptströmung, welcher die Zusammenführung des Spaltmassenstroms mit der Hauptströmung behindert und den Wirkungsgrad der Turbine vermindert. Zudem ist der Queraustausch durch die Form des Deckbands und benachbarten Leitschaufelfusses noch begünstigt.

Handelt es sich bei der Laufschaufel um eine Randschaufel, der eine radiale Anzapfung oder ein Diffusor folgt, verhindert die Kavität eine strömungsorientierte Führung der Haupt- und Spaltströmung.

### Darstellung der Erfindung

Angesichts des beschriebenen Standes der Technik ist der Erfindung die Aufgabe gestellt, in einer Turbomaschine die Spalt- und Randverluste weiter zu reduzieren und die Führung des Spaltmassenstroms zu verbessern, indem ein Queraustausch zwischen Spalt- und Hauptströmung möglichst vermieden wird.

Diese Aufgabe wird erfindungsgemäss durch eine Turbomaschine gemäss dem Oberbegriff des Anspruchs 1 gelöst, die einen Dichtstreifen zur Abdeckung der ausgangsseitigen Kavität zwischen dem Deckband einer Laufschaufel und der gegenüberliegenden Wand des Turbinengehäuses aufweist, der eine Krümmung in Strömungsrichtung aufweist, wobei die Innenseite der Krümmung dem Spaltmassenstrom zugewandt ist, und der Dichtstreifen über den Spalt zwischen Turbinengehäuse und Deckband hinweg und in axialer Richtung dem Deckband entlang verläuft.
Ferner ist, zwecks der verlustfreieren Zusammenführung der Spaltströmung mit der Hauptströmung, die strömungsführende Kontur, welche der Labyrinthdichtung folgt, von der Welle weiter entfernt oder gleich weit entfernt wie der radiale Spalt zwischen dem gekrümmten Dichtstreifen und dem Deckband. Die der Labyrinthdichtung nachfolgende strömungsführende Kontur besteht dabei zum Beispiel aus einem Teil des Turbinengehäuses oder dem Ansatz des benachbarten Leitschaufelfusses.
Schliesslich weist das Deckband einen Überhang auf, der in Strömungsrichtung über die Kante der Laufschaufel hinausragt und in Richtung der austretenden Spaltströmung angewinkelt ist.

Der gekrümmte Dichtstreifen dient dazu, den Spalt zwischen dem Turbinengehäuse und der Seite des Deckbands am Ausgang der Labyrinthdichtung möglichst abzudecken und so eine fast vollständig geschlossene Kavität zu bilden. Die Spaltströmung dissipiert so in dieser abgedeckten Kavität ohne die Hauptströmung zu stören. Die Spaltströmung, die zwischen dem Deckband und dem gekrümmten Dichtstreifen noch hindurch gelangt, strömt dem Dichtstreifen entlang und trifft auf die Hauptströmung und nachfolgende strömungsführende Konturen, wie den Fuß der benachbarten Leitschaufel oder die Wandung einer Anzapfung oder eines Diffusors. Da der axial verlaufende Teil des Dichtstreifens im Vergleich zu diesen nachfolgenden strömungsführenden Konturen von der Welle gleich oder weniger weit entfernt liegt, wird die austretende Spaltströmung keinen starken Richtungsänderungen unterworfen. Der angewinkelte Überhang des Deckbands dient der Vermeidung von Wirbeln nach Verlassen der Laufschaufel und der Zusammenführung mit der Spaltströmung unter möglichst kleinem Winkel. Hierdurch wird ferner eine Homogenisierung des radialen Totaldruckes bewirkt.

Im Fall einer Hochdruckturbine mit einem kleinen Konuswinkel zwischen Turbinenachse und -gehäuse weist das Deckband einen Überhang auf, dessen der Achse zugewandte Seite in einem leichten Winkel zur Turbinenachse verläuft. Der Fuss einer benachbarten Leitschaufel weist ebenfalls einen Überhang auf, der im Vergleich zum Überhang am Deckband in radialer Richtung von der Welle weiter entfernt ist. Die austretende Spaltströmung strömt nahezu axial aus der Labyrinthdichtung während die Hauptströmung dem Überhang des Deckbands entlang strömt und darauf unter kleinem Winkel auf die Spaltströmung trifft.

Im Fall einer Mittel- oder Niederdruckturbine mit grösserem Konuswinkel zwischen Turbinenachse und -gehäuse weist das Turbinengehäuse zur Führung der Spaltund Hauptströmung zusätzlich einen umlaufend ausgebildeten Kragen mit angewinkeltem Profil auf. Dieser Kragen dient der Führung der Spalt- und Hauptströmung im Raum zwischen dem gekrümmten Dichtstreifen und einer nachfolgenden Leitschaufel.

Handelt es sich um eine Randlaufschaufel mit nachfolgender Anzapfung weist das Deckband einen Überhang auf, der in Richtung der Anzapfung zugespitzt ist, sodass die Hauptströmung entlang der äusseren Seite des gekrümmten Dichtstreifens in den Anzapfkanal verläuft. Die austretende Spaltströmung strömt ebenfalls dem Dichtungsstreifen entlang und trifft fast tangential auf die Hauptströmung.
Im Fall einer Randlaufschaufel mit nachfolgendem Diffusor ist der Überhang am Deckband der Laufschaufel mit einem Winkel versehen, der entsprechend dem homogenen Totaldruck angepasst ist. Die Spaltströmung strömt zunächst nahezu axial aus dem Dichtspalt und strömt sodann unter Wirkung des Coanda-Effekts dem gekrümmten Dichtstreifen entlang in den Diffusor und gelangt dabei unter kleinem Winkel in die Hauptströmung. Die Diffusorwirkung wird dabei durch die vom Coanda-Effekt geführten Spaltströmung verstärkt. Eine solche Wirkung wird oft auch "diffusor-augmentation" genannt.

Die erfindungsgemässe Labyrinthdichtung erbringt einerseits den Vorteil einer erhöhten Dichtung des Spaltes und einer Unterdrückung des Queraustauschs mit der Hauptströmung. Anderseits zeichnet sich die Dichtung durch eine Anpassungsfähigkeit des Dichtstreifens aus im Fall von betriebsbedingten, thermischen Veränderungen der Kavitätsgrösse. Das Spiel zwischen axial orientiertem Dichtstreifen und dem Deckband bleibt im Fall von axialen Verschiebungen des Rotors bezüglich des Turbinengehäuses konstant. Weiter dehnt sich der axiale Dichtstreifen bei Erwärmung vom Deckband weg und streift das Deckband nicht wie es bei geraden Dichtstreifen der Fall sein würde.
Die erhöhte Dichtung des Spaltes ergibt sich durch eine praktisch vollständige Abdeckung der Kavität zwischen Deckband und Turbinengehäuse. Der Dichtstreifen bildet aus der Kavität eine hochwirksame Wirbelkammer als Teil der Labyrinthdichtung, worin sich der Spaltstrom dissipieren kann und wodurch sich der Spaltmassenstrom reduziert. Der gekrümmte Dichtstreifen bildet zudem einen schmäleren Dichtspalt und einen stark verminderten Durchflusskoeffizienten.

Der Überhang an der Ausgangsseite des Deckbands erbringt den Vorteil, dass er den Eintritt der Spaltströmung in die Hauptströmung begünstigt und einen Queraustausch zwischen den beiden Strömungen unterdrückt. Der Überhang am benachbarten Leitschaufelfuss im einen Fall und die angewinkelten Kragen am Turbinengehäuse im anderen Fall begünstigen den Eintritt in die Hauptströmung weiter, indem der Winkel zwischen Hauptströmung und eintretender Spaltströmung vermindert ist.

Das Spiel zwischen radial verlaufenden Dichtstreifen und Deckband wird bei Dichtungen für Turbomaschinen des Standes der Technik in vielen Fällen so bemessen, dass während des Betriebs ein genügend grosses Spiel besteht, um eine Anstreifung zu vermeiden. Dadurch ergibt sich aber ein Spiel, welches die Spaltströmung begünstigt. Der erfindungsgemässe Dichtstreifen hat den Vorteil, dass der Abstand zwischen Dichtstreifen und Deckband im Vergleich sehr klein ist und in bestimmten Betriebszuständen sogar gleich null ist. Dieses kleine Spiel ist dadurch ermöglicht, indem der Dichtstreifen aufgrund seiner axialen Orientierung im Fall eines Anstreifens an das Deckband federnd nachgibt und bei einer Erwärmung sich radial vom Deckband wegdehnt. Eine irreversible Deformierung des Dichtstreifens und des Deckbands, wie es beim Anstreifen von radial verlaufenden Dichtstreifen vorkommt, wird durch den erfindungsgemässen Dichtstreifen vermieden.

### Kurze Beschreibung der Zeichnungen

Es zeigen Figuren 1 bis 5 Meridianschnitte durch eine axial durchströmte thermische Turbomaschine mit Labyrinthdichtungen und der üblichen strömungsführenden Geometrie. Davon zeigen
Figur 1: eine Labyrinthdichtung an einer Laufschaufel einer Hochdruckturbine gemäss des Standes der Technik,
Figur 2: eine Labyrinthdichtung an einer Laufschaufel einer Hochdruckturbine,
Figur 2a: eine nachgerüstete Labyrinthdichtung an einer Laufschaufel einer Hochdruckturbine,
Figur 3: eine Labyrinthdichtung an einer Laufschaufel einer Niederdruckturbine im Frontstufenbereich,
Figur 4: eine Labyrinthdichtung an einer Randlaufschaufel einer Niederdruckturbine mit nachfolgender Anzapfung und
Figur 5: eine Labyrinthdichtung an einer Randlaufschaufel mit nachfolgendem Diffusor.

Bei sämtlichen Figuren ist die Strömungsrichtung des Arbeitsmediums der Turbomaschine mit Pfeilen angedeutet. In den verschiedenen Figuren sind jeweils gleiche Elemente mit den gleichen Bezugszeichen versehen.

### Weg der Ausführung der Erfindung

In Figur 1 ist eine Hochdruckturbine des Standes der Technik dargestellt, wovon eine Laufschaufel 1 und ihr benachbarte Leitschaufeln 2 gezeigt sind. Bei der gezeigten Hochdruckturbine beträgt der Konuswinkel zwischen Welle 7' und Gehäuse 7 an der Stelle der gezeigten Leitschaufeln 5 bis 6°. Die Laufschaufel 1 ist mit einem Deckband 3 versehen, das in der Mitte eine Stufe 4 aufweist. Gegenüber dem Deckband 3 sind am Turbinengehäuse 7 gerade, radiale Dichtstreifen 5 befestigt, die den Spalt gegen das Deckband 3 dichten. Das Deckband 3 und die Dichtstreifen 5 bilden eine Labyrinthdichtung, welche die Spaltströmung 6 zwischen der Laufschaufel 1 und dem Turbinengehäuse 7 reduziert. Am Strömungsaustritt der Laufschaufel 1, zwischen dem Turbinengehäuse 7, dem Leitschaufelfuss 8 und dem Deckband 3 besteht eine Kavität 9, in welcher die Spaltströmung 6 stark dissipiert wird. Beim Austritt der Spaltströmung 6 aus der Kavität 9 trifft sie unter grossem Winkel auf die Hauptströmung 10, wo sie, unter Störung der Hauptströmung, dissipiert. Zudem stellt sich ein druckfeldgetriebener Queraustausch zwischen der Hauptströmung und der Kavität ein, was schliesslich der Wirkungsgrad der Turbine beeinträchtigt. Während die strichlierten Linien die relative Position der Laufschaufel 1 im Verhältnis zum Turbinengehäuse 7 und zur Leitschaufel 2 im transienten Zustand darstellen, zeigen die ausgezogenen Linien die relative Position während des Betriebs.

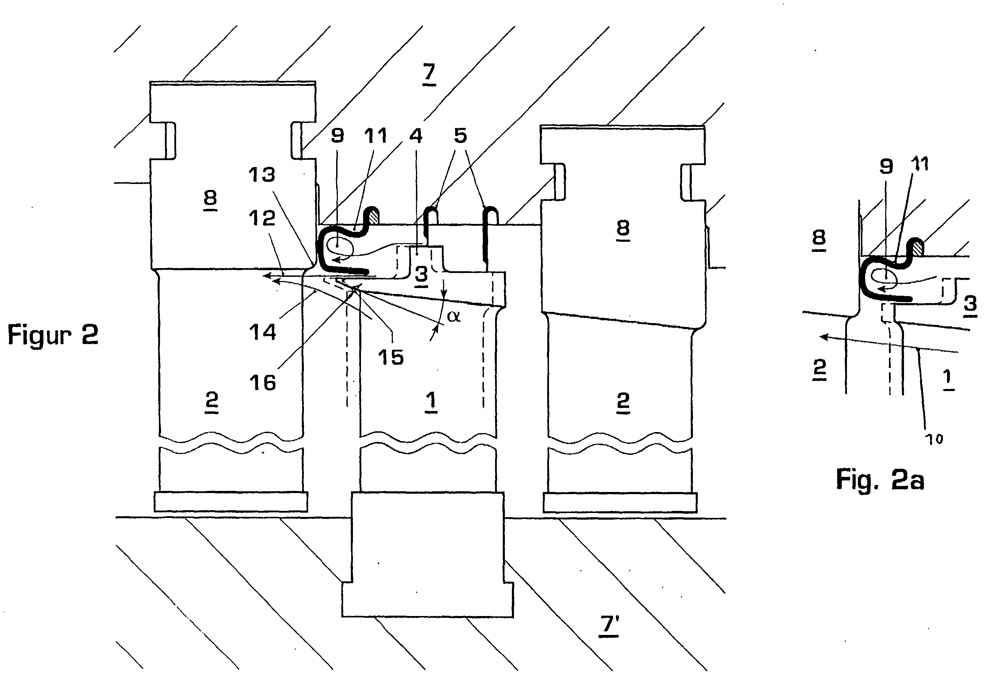

Figur 2 zeigt eine erste Ausführung der erfindungsgemässen Labyrinthdichtung an einer Laufschaufel 1 am Beispiel der Hochdruckturbine von Figur 1. Die Laufschaufel 1 ist wiederum mit einer Labyrinthdichtung mit Deckband 3 und Dichtstreifen 5 versehen. Erfindungsgemäss ist der letzte Dichtstreifen 11 vor dem Austritt der reduzierten Spaltströmung 12 aus dem Spalt in Strömungsrichtung stark gekrümmt. Er ist im Turbinengehäuse 7 beispielsweise eingestemmt und verläuft den Wänden der Kavität 9 entlang. Er deckt den Spalt zwischen dem Leitschaufelfuss 8 und dem Deckband 3 ab und verläuft in axialer Richtung eng der Oberfläche des Deckbandes 3 entlang. Der Dichtstreifen 11 grenzt hier die ganze Austrittskavität praktisch vollständig ab, wobei die Spaltströmung 12 sich in der Kavität wirksam dissipiert.
Der radiale Abstand zwischen dem Deckband 3 und dem Dichtstreifen 11 kann unter Umständen gleich null sein, da er im Fall eines Anstreifens federnd nachgibt. Der Spaltstrom 12 ist dank der Krümmung und des axialen Verlaufs des Dichtstreifens 11 stark reduziert. Dies ist auch bei verschiedenen Betriebszuständen der Fall, da der Abstand zwischen Dichtstreifen und Deckband ungefähr gleich bleibt.
Die hier gezeigte Ausführung weist am Deckband 3 eine Stufe 4 auf, gegenüber der einer der mittleren Dichtstreifen 5 der Labyrinthdichtung angeordnet ist. Der Spaltstrom 12, der an diesem Dichtstreifen 5 vorbei gelangt, strömt in axialer Richtung in die Kavität 9, wo er wirksam verwirbelt wird, wobei die Einströmung des Spaltstroms in die Mitte der Kavität 9 für die Verwirbelung von besonderem Vorteil ist. Anstelle eines gestuften Deckbands ist jedoch auch ein Deckband mit glatter Oberfläche ausführbar.

In einer weiteren Variante sind die mittleren Dichtstreifen 5, anstatt radial und gerade, gekrümmt ausgebildet. Sie sind am Turbinengehäuse 7 befestigt und verlaufen nach der Krümmung axial dem Deckband entlang. Der Vorteil dieser Variante ist ähnlich wie beim Dichtstreifen 11 am Ausgang der Labyrinthdichtung, dass bei Anstreifung der Dichtstreifen am Deckband aufgrund von thermischen Ausdehnungen der Maschine die Dichtstreifen federnd nachgeben und dadurch eine Spielvergrösserung am Deckband vermieden wird.
Der Überhang 13 des Leitschaufelfusses 8 ist im Vergleich zum gezeigten Stand der Technik in radialer Richtung von der Welle 7' weiter entfernt angeordnet und insbesondere weiter entfernt als der radiale Spalt zwischen Dichtstreifen 11 und Deckband 3. Es kann hier auch das Deckband 3 mit einer kleineren radialen Breite ausgebildet werden. Der Überhang 13 und der Spalt können auch gleich weit von der Welle angeordnet sein. Solche Anordnungen des Überhangs 13 bezüglich des Deckbands 3 bewirkt, dass die Spaltströmung 12, welche zwischen dem Dichtstreifen 11 und dem Deckband 3 hindurch gelangt, nahezu axial und unter kleinem Winkel in die Hauptströmung 14 eintritt. Ungünstige Verwirbelungen entstehen dadurch nur in vermindertem Ausmass.
Der Überhang 15 des Deckbandes 3 ist im Vergleich zum gezeigten Stand der Technik einerseits verlängert, anderseits ist die der Welle 7' zugewandte Seite 16 angewinkelt. Die Hauptströmung 14 wird von diesem Überhang 15 geführt. Der Eintritt der Spaltströmung 12 in die Hauptströmung 14 ergibt sich dadurch unter einem günstigeren, kleinen Winkel. Der Winkel α des Überhangs 15 der Turbine im Hinblick auf eine Vergleichmässigung des Totaldruckprofils beispielsweise 10 bis 20°.
Die Verlängerung des Deckbands 3 mittels des Überhangs 15 erbringt-ferner den Vorteil eines reduzierten Nachlaufs und dadurch verminderten Wirbeln. Die Verlängerung des Deckbands ist auch in der Form einer Spitze ausführbar, wodurch der Nachlauf nahezu vollständig vermieden werden kann.
In Figur 2a ist eine Laufschaufel 1 und benachbarte Leitschaufel 2 und Leitschaufelfuss 8 wie in Figur 1 gezeigt, deren Labyrinthdichtung mit einem erfindungsgemässen gekrümmten Dichtstreifen 11 nachgerüstet ist. Der gekrümmte Dichtstreifen 11 ist hierfür in die letzte Nut der bestehenden Labyrinthdichtung, in der zuvor ein gerader Dichtstreifen angeordnet war, eingestemmt. Er deckt wiederum die Austrittskavität 9 ab, wobei der Spaltstrom in der abgedeckten Kavität 9 dissipiert.

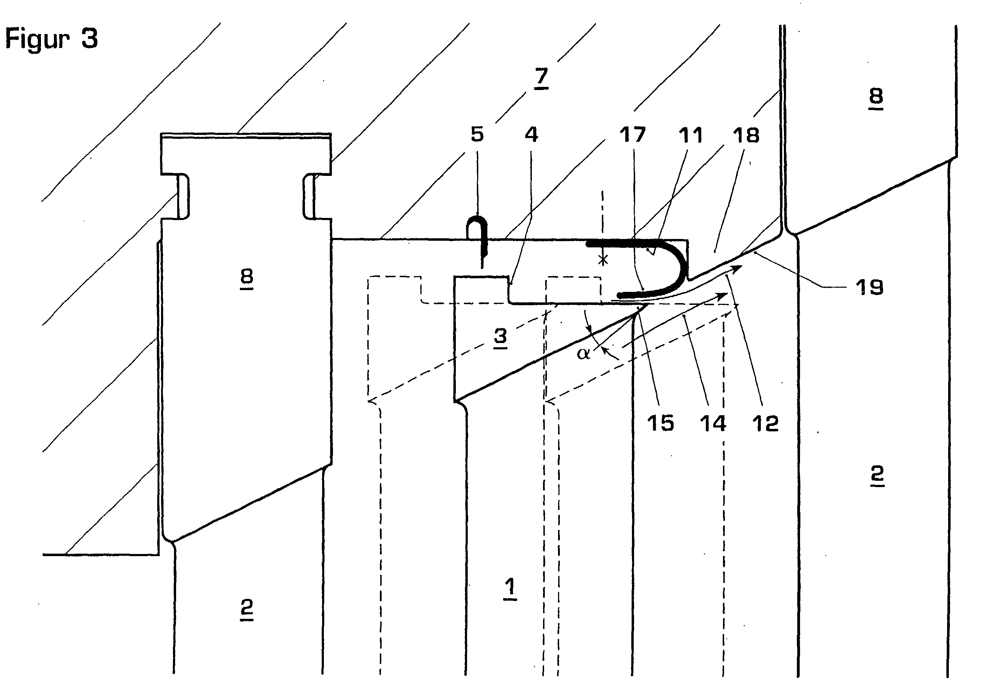

Figur 3 zeigt eine Labyrinthdichtung an einer Laufschaufel 1 am Beispiel der dritten Stufe einer Niederdruckturbine mit einem Konuswinkel von 25 - 28°. Sie ist ebenfalls mit einem Deckband 3 mit einer Stufe 4 und einem Dichtstreifen 5 versehen. Die strichlierten Linien zeigen die relativen Extrempositionen der Laufschaufel bezüglich des Turbinengehäuses 7 aufgrund der thermischen Dehnungen dieser Niederdruckturbine, wobei die ausgezogenen Linien die Position während des Betriebs darstellt. Erfindungsgemäss weist die Labyrinthdichtung am Austritt der Spaltströmung einen gekrümmten Dichtstreifen 11 auf, wobei die Krümmung in Strömungsrichtung ausgebildet ist. Die der Welle zugewandte Seite 17 des gekrümmten Dichtstreifens 11 bildet mit der Welle einen Winkel, der dem Konuswinkel ungefähr gleich ist, und das Ende des Dichtstreifens 11 verläuft axial entlang der Oberfläche des Deckbands 3. Der Dichtstreifen 11 bildet, zumindest während der einen Betriebszustände, eine fast vollständig abgedeckte Wirbelkammer mit einem schmalen Spiel zum Deckband 3, wodurch die Spaltströmung 12 vermindert wird.
Zur Lenkung der Hauptströmung 14 und Spaltströmung 12 weist das Deckband 3 einen über den Rand der Laufschaufel 1 vorstehenden Überhang 15 auf, dessen Seite, die der Welle zugewandt ist, einen Winkel α aufweist.
Ferner weist in dieser Ausführung der Erfindung das Turbinengehäuse 7 einen Kragen 18 mit keilförmigem Querschnitt auf, wobei die der Welle zugewandte Seite 19 des Kragens 18 einen Winkel aufweist, der dem Konuswinkel angepasst ist. Der Überhang 15 am Deckband 3 bewirkt zusammen mit dem Kragen 18 am Turbinengehäuse 7 einen Eintritt der Spaltströmung 12 in die Hauptströmung 14 unter kleinem Winkel.
Der Dichtstreifen 11 ist in dieser Figur am Turbinengehäuse 7 beispielsweise mittels Schrauben befestigt. Der Dichtstreifen kann in einer weiteren Ausführung auch kürzer ausgebildet sein, wobei er dicht neben dem Kragen 18 am Turbinengehäuse, beispielsweise durch Einstemmen, befestigt ist. Der Dichtstreifen verläuft dabei wiederum axial dem Deckband entlang.
In einer weiteren Ausführung ist der Dichtstreifen am Kragen 18 befestigt und besitzt eine leichte Krümmung, sodass er axial dem Deckband entlang verläuft.

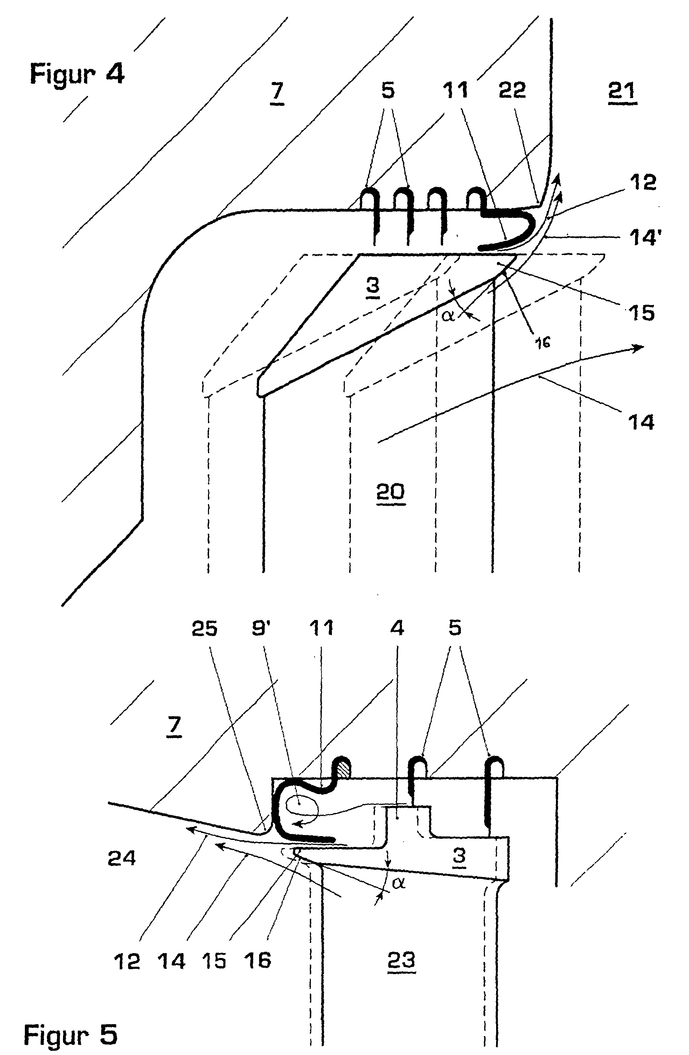

Figur 4 zeigt eine Dichtung einer Randlaufschaufel 20 einer Niederdruckturbine mit nachfolgender Anzapfung 21, wobei die ausgezogenen Linien die relative Position der Randlaufschaufel 20 während des Betriebs und die strichlierten Linien die relative Position während des An- und Abfahrens der Turbine darstellen.
Ähnlich der vorangehenden Ausführungen der Erfindung weist diese Dichtung ein Deckband 3 und mehrere Dichtstreifen 5 auf, wovon der in Strömungsrichtung letzte Dichtstreifen 11 in Strömungsrichtung gekrümmt ist. Die gekrümmte Seite des Dichtstreifens 11 deckt den Spalt zwischen Deckband 3 und Turbinengehäuse 7 während des Turbinenbetriebs (ausgezogene Linie der Laufschaufel) wirksam ab, wobei die der Welle zugewandte Seite des Streifens 11 axial dem Deckband 3 entlang verläuft. Zur Führung der Anzapfströmung 14' und der Spaltströmung 12 in die Anzapfung 21 ist nachfolgend dem gekrümmten Teil des Dichtstreifens 11 am Turbinengehäuse 7 eine ringförmige Gehäusekontur 22 angeordnet, die in Strömungsrichtung leicht über dem gekrümmten Teil des Dichtstreifens 11 hervorsteht. Zum selben Zweck ist das Deckband 3 mit einem Überhang 15 versehen, dessen der Welle zugewandte Seite 16 in Richtung der Anzapfung 21 angewinkelt ist. Der Überhang 15 und die ringförmige Gehäusekontur 22 lenken zusammen mit dem gekrümmten Teil des Dichtstreifens 11 die Anzapfströmung 14' und die Spaltströmung mit verminderten Verwirbelungen in die Anzapfung 21. Die Spaltströmung 12 tritt dabei in die Anzapfung ein, ohne die Anzapfströmung 14' oder die Hauptströmung 14 zu beeinträchtigen.
Bei der Gestaltung des Strömungseintritts in die Anzapfung 21 wird hier vor allem der sogenannte Coanda-Effekt berücksichtigt, wonach eine Strömung einer gekrümmten Wandung entlang verläuft unter der Voraussetzung, dass die Wandung einen Krümmungsradius besitzt, der für die vorherrschende Strömungsgeschwindigkeit genügend gross ist. Der Winkel des Überhangs 15 an der Seite 16, die Krümmung des Dichtstreifens 11 und das Ausmass der Gehäusekontur 22 am Turbinengehäuse sind so ausgebildet, dass die Tangentiallinie entlang diesen drei Bestandteilen in die Anzapfung eine möglichst gleichmässige Krümmung besitzt, was einen Coanda-Effekt begünstigt.

Figur 5 zeigt eine Randlaufschaufel 23 mit nachfolgendem Diffusor 24, deren Labyrinthdichtung, ähnlich wie in Figur 2, einen gekrümmten Dichtstreifen 11 aufweist. Dieser deckt die Kavität 9 zwischen Turbinengehäuse 7 und dem Deckband 3 der Randlaufschaufel 23 ab, wobei die eine Seite des Streifens 11 axial dem Deckband 3 entlang verläuft. Zwecks möglichst krümmungs- und wirbelfreier Führung der Spaltströmung 12 in den Diffusor, liegt die Lippe 25 des Diffusors 24 in radialer Richtung von der Welle weiter entfernt, oder zumindest gleich weit entfernt, wie die Oberfläche des Deckbands 3 und der axial verlaufende Teil des Dichtstreifens 11. Dies bewirkt, dass die Spaltströmung 12 nur mit leichter Krümmung in den Diffusor 24 gelangt, ohne die Hauptströmung zu stören.
Zur Führung der Hauptströmung 14 in den Diffusor unter Vermeidung von Verwirbelungen ist das Deckband 3 mit einem Überhang 15 ausgebildet, dessen der Welle zugewandte Seite 16 einen Winkel α aufweist, der ein möglichst homogenes Totaldruckprofil ergibt. Die Krümmung des Dichtstreifens ist vorzugsweise so gewählt, sodass ein Coanda-Effekt wiederum begünstigt ist.

### Bezugszeichenliste

- 1: Laufschaufel
- 2: Leitschaufel
- 3: Deckband
- 4: Stufe
- 5: Dichtstreifen
- 6: Spaltströmung (im Stand der Technik)
- 7: Turbinengehäuse
- 7': Welle
- 8: Leitschaufelfuss
- 9: Kavität
- 10: Hauptströmung (im Stand der Technik)
- 11: Gekrümmter Dichtstreifen
- 12: Spaltströmung (gemäss Erfindung)
- 13: Überhang des Leitschaufelfusses
- 14: Hauptströmung (gemäss Erfindung)
- 14': Anzapfströmung
- 15: Überhang des Deckbandes
- 16: Angewinkelte Seite des Deckbandüberhangs
- 17: Seite des gekrümmten Dichtstreifens
- 18: Kragen mit keilförmigem Querschnitt
- 19: Seite des Ringes
- 20: Randlaufschaufel
- 21: Anzapfung
- 22: Ringförmige Gehäusekontur
- 23: Randlaufschaufel
- 24: Diffusor
- 25: Diffusorlippe

## Patentansprüche

1. Axial durchströmte Turbomaschine mit Leitschaufeln (2), die jeweils mittels einem Leitschaufelfuss (8) in einem Turbinengehäuse (7) verankert sind, und Laufschaufeln (1, 20, 23), die in einer Welle (7') verankert sind, und mit jeweils einer Labyrinthdichtung zwischen den Laufschaufeln (1, 20, 23) und dem Turbinengehäuse (7) zwecks Begrenzung einer Spaltströmung (12), wobei jede Labyrinthdichtung ein an den Laufschaufeln (1, 20, 23) angeordnetes, ringförmig ausgebildetes Deckband (3), einen oder mehrere am Turbinengehäuse (7) befestigte Dichtstreifen (5) und an der Ausgangsseite der Labyrinthdichtung zwischen dem Turbinengehäuse (7) und dem Deckband (3) eine Kavität (9) aufweist und nachfolgend der Labyrinthdichtung eine strömungsführende Kontur angeordnet ist
**dadurch gekennzeichnet, dass**
die Kavität (9) mit einem gekrümmten Dichtstreifen (11) versehen ist, wobei die Innenseite der Krümmung des Dichtstreifens (11) der Spaltströmung (12) zugewandt ist und der gekrümmte Dichtstreifen (11) über den Spalt zwischen dem Turbinengehäuse (7) und der Strömungsausgangsseite des Deckbands (3) hinweg und in axialer Richtung dem Deckband (3) entlang verläuft.

2. Axial durchströmte Turbomaschine nach Anspruch 1
**dadurch gekennzeichnet, dass**
der axial, dem Deckband (3) entlang verlaufende Teil des gekrümmten Dichtstreifens (11) von der Welle (7') gleich weit entfernt ist oder näher liegt als die strömungsführende Kontur, die der Labyrinthdichtung nachfolgt.

3. Axial durchströmte Turbomaschine nach Anspruch 2
**dadurch gekennzeichnet, dass**
das Deckband (3) einen Überhang (15) aufweist, der in Richtung der nachfolgenden strömungsführenden Kontur angewinkelt ist.

4. Axial durchströmte Turbomaschine nach Anspruch 3
**dadurch gekennzeichnet, dass**
die der Welle zugewandte Seite (16) des Überhangs (15) des Deckbands (3) einen Winkel zur Turbinenachse aufweist, der zwischen 10° und 20° beträgt.

5. Axial durchströmte Turbomaschine nach Anspruch 2
**dadurch gekennzeichnet, dass**
das Turbinengehäuse (7) in Strömungsrichtung nachfolgend dem Deckband (3) einen Kragen (18) mit angewinkeltem Profil aufweist, dessen der Welle zugewandte Seite (19) in Richtung des Konuswinkels der Turbomaschine angewinkelt ist.

6. Axial durchströmte Turbomaschine nach Anspruch 2
**dadurch gekennzeichnet, dass**
der Leitschaufelfuss (8), welcher der Labyrinthdichtung in Strömungsrichtung benachbart ist, einen Überhang (13) aufweist, der in radialer Richtung von der Welle weiter entfernt ist als der axial verlaufende Teil des gekrümmten Dichtstreifens (11) oder gleich weit davon entfernt ist.

7. Axial durchströmte Turbomaschine nach Anspruch 6
**dadurch gekennzeichnet, dass**
der gekrümmte Dichtstreifen (11) radial gegenüber dem Deckband (3) am Turbinengehäuse (7) befestigt ist.

8. Axial durchströmte Turbomaschine nach Anspruch 6
**dadurch gekennzeichnet, dass**
der gekrümmte Dichtstreifen (11) am Kragen (18) befestigt ist.

9. Axial durchströmte Turbomaschine nach Anspruch 1
**dadurch gekennzeichnet, dass**
das Deckband (3) mindestens eine Stufe (4) aufweist und einer oder mehrere der mittleren Dichtstreifen (5) den Spalt gegen diese Stufe (4) dichten.

10. Axial durchströmte Turbomaschine nach Anspruch 9
**dadurch gekennzeichnet, dass**
der oder die mittleren Dichtstreifen (5) gekrümmt ausgebildet sind und axial der Stufe (4) entlang verlaufen.

## Claims

1. Axial-flow turbomachine having guide blades (2) which are each anchored in a turbine casing (7) by means of a guide-blade root (8), and moving blades (1, 20, 23) which are anchored in a shaft (7'), and in each case a labyrinth seal between the moving blades (1, 20, 23) and the turbine casing (7) for the purpose of limiting a gap flow (12), each labyrinth seal having an annular shroud band (3) arranged on the moving blades (1, 20, 23), one or more sealing strips (5) fastened to the turbine casing (7), and a cavity (9) on the outlet side of the labyrinth seal between the turbine casing (7) and the shroud band (3), and a flow-conducting contour being arranged so as to follow the labyrinth seal, **characterized in that** the cavity (9) is provided with a curved sealing strip (11), the inside of the curvature of the sealing strip (11) facing the gap flow (12), and the curved sealing strip (11) running over the gap between the turbine casing (7) and the flow outlet side of the shroud band (3) and along the shroud band (3) in the axial direction.

2. Axial-flow turbomachine according to Claim 1, **characterized in that** that part of the curved sealing strip (11) which runs axially along the shroud band (3) is at the same distance from the shaft (7') as the flow-conducting contour which follows the labyrinth seal, or is closer than said flow-conducting contour.

3. Axial-flow turbomachine according to Claim 2, **characterized in that** the shroud band (3) has an overhang (15) which is angled in the direction of the following flow-conducting contour.

4. Axial-flow turbomachine according to Claim 3, **characterized in that** that side (16) of the overhang (15) of the shroud band (3) which faces the shaft is at an angle of between 10° and 20° to the turbine axis.

5. Axial-flow turbomachine according to Claim 2, **characterized in that** the turbine casing (7), following the shroud band (3) in the direction of flow, has a collar (18) with an angled profile, whose side (19) facing the shaft is angled in the direction of the cone angle of the turbomachine.

6. Axial-flow turbomachine according to Claim 2, **characterized in that** the guide-blade root (8) which is adjacent to the labyrinth seal in the direction of flow has an overhang (13) which, in the radial direction, is further away from the shaft than the axially running part of the curved sealing strip (11) or is at the same distance therefrom.

7. Axial-flow turbomachine according to Claim 6, **characterized in that** the curved sealing strip (11) is fastened to the turbine casing (7) radially opposite the shroud band (3).

8. Axial-flow turbomachine according to Claim 6, **characterized in that** the curved sealing strip (11) is fastened to the collar (18).

9. Axial-flow turbomachine according to Claim 1, **characterized in that** the shroud band (3) has at least one step (4), and one or more of the centre sealing strips (5) seal the gap relative to this step (4).

10. Axial-flow turbomachine according to Claim 9, **characterized in that** the sealing strip or centre sealing strips (5) are designed to be curved and run axially along the step (4).

## Revendications

1. Turbomachine axiale avec des aubes directrices (2), qui sont chacune ancrées dans un corps de turbine (7) au moyen d'un pied d'aube directrice (8), et des aubes mobiles (1, 20, 23), qui sont ancrées dans un arbre (7'), et avec à chaque fois un joint à labyrinthe entre les aubes mobiles (1, 20, 23) et le corps de turbine (7) en vue de limiter un écoulement de fuite (12), dans laquelle chaque joint à labyrinthe présente une bande de recouvrement (3) de forme annulaire, disposée sur les aubes mobiles (1, 20, 23), un ou plusieurs rubans d'étanchéité (5) fixés sur le corps de turbine (7) et une cavité (9) entre le corps de turbine (7) et la bande de recouvrement (3), sur le côté de sortie du joint à labyrinthe, et un contour de guidage de l'écoulement est disposé à la suite du joint à labyrinthe, **caractérisée en ce que** la cavité (9) est pourvue d'un ruban d'étanchéité recourbé (11), dans lequel la face intérieure de la courbure du ruban d'étanchéité (11) est tournée vers l'écoulement de fuite (12) et le ruban d'étanchéité recourbé (11) est placé sur la fente entre le corps de turbine (7) et la face de sortie de l'écoulement de la bande de recouvrement (3) et s'étend dans la direction axiale le long de la bande de recouvrement (3).

2. Turbomachine axiale suivant la revendication 1, **caractérisée en ce que** la partie du ruban d'étanchéité recourbé (11) placée axialement le long de la bande de recouvrement (3) est située à la même distance ou est placée plus près de l'arbre (7') que le contour de guidage de l'écoulement, qui suit le joint à labyrinthe.

3. Turbomachine axiale suivant la revendication 2, **caractérisée en ce que** la bande de recouvrement (3) présente un surplomb (15), qui est biseauté dans la direction du contour de guidage de l'écoulement qui suit.

4. Turbomachine axiale suivant la revendication 3, **caractérisée en ce que** la face (16) du surplomb (15) de la bande de recouvrement (3) tournée vers l'arbre présente, par rapport à l'axe de la turbine, un angle qui vaut entre 10° et 20°.

5. Turbomachine axiale suivant la revendication 2, **caractérisée en ce que** le corps de turbine (7) présente, à la suite de la bande de recouvrement (3) dans le sens de l'écoulement, un collet (18) avec un profil incliné, dont la face (19) tournée vers l'arbre est inclinée dans le sens de la conicité de la turbomachine.

6. Turbomachine axiale suivant la revendication 2, **caractérisée en ce que** le pied d'aube directrice (8), qui est proche du joint à labyrinthe dans le sens de l'écoulement, présente un surplomb (13), qui est plus éloigné de l'arbre, en direction radiale, que la partie du ruban d'étanchéité recourbé (11) posée axialement ou qui est placé à une distance égale de celui-ci.

7. Turbomachine axiale suivant la revendication 6, **caractérisée en ce que** le ruban d'étanchéité recourbé (11) est fixé sur le corps de turbine (7) radialement par rapport à la bande de recouvrement (3).

8. Turbomachine axiale suivant la revendication 6, **caractérisée en ce que** le ruban d'étanchéité recourbé (11) est fixé sur le collet (18).

9. Turbomachine axiale suivant la revendication 1, **caractérisée en ce que** la bande de recouvrement (3) présente au moins un gradin (4) et un ou plusieurs des rubans d'étanchéité centraux (5) ferment la fente contre ce gradin (4).

10. Turbomachine axiale suivant la revendication 9, **caractérisée en ce que** le ou les ruban(s) d'étanchéité central/centraux (5) est/sont recourbé(s) et est/sont posé(s) axialement le long du gradin (4).
